# EUROPEAN PATENT SPECIFICATION

(11) **EP 2 521 110 B1**
(45) Date of publication and mention of the grant of the patent: **13.11.2013**
(21) Application number: 11290217.6
(22) Date of filing: 06.05.2011
(51) Int. Cl.: G08G 1/0967, B60T 7/18, H04W 64/00

(54) **A small cell base station, a method of controlling movement of a machine-type-communication (MTC) unit, and a braking system for a vehicle**
Kleinzellige Basisstation, Verfahren zur Bewegungssteuerung einer Einheit zur Maschinenkommunikation und Bremssystem für ein Fahrzeug
Station de base à petites cellules, procédé de contrôle du mouvement d'une unité de communication de type machine et système de freinage pour véhicule

(43) Date of publication of application: 07.11.2012
(73) Proprietor: Alcatel Lucent, 75007 Paris (FR)
(72) Inventor: Brend, Graham, Bath Somerset BA1 7UE (GB); Puddle, Nicola, Swindon, Wiltshire SN4 0ND (GB)
(74) Representative: Sarup, David Alexander

(56) References cited:
- EP-A1- 1 939 833
- EP-A1- 2 249 603
- DE-A1-102007 027 651

## Description

### Field of the Invention

The present invention relates to telecommunications, in particular to wireless telecommunications.

### Description of the Related Art

A number of serious accidents and incidents are caused by vehicles being driven inappropriately; for example when driven in the wrong direction along roads, such as motorways and dual carriageways, or when driven dangerously during a police pursuit.

Driving in the wrong direction, that is, against the correct direction of traffic, is often due to drivers failing to notice signs barring entry to that road from the direction in which the vehicle is travelling. This may be due to, for example, confusing signage, driver error, or poor visibility due to bad weather. In some scenarios, inappropriate and dangerous driving is a deliberate action, for example when the driver seeks to evade the police.

Known solutions to the problem of a vehicle being driven in the wrong direction include the provision of warning road-signs that provide a visible instruction not to enter a particular road. However, these signs are often not seen or ignored, for example by a flustered or tired driver driving in the dark or when weather conditions are poor.

For scenarios involving deliberately inappropriate driving, known solutions are for the police to deliberately attempt to halt the pursued vehicle, for example by puncturing its tyres or physically forcing the vehicle to stop. These solutions are often dangerous and error-prone.

German Patent Publication DE 10 2007 027651 A1 and European Patent Publication EP 2249603A1 provide technical background. It is known from DE 10 2007 027651 A1 to provide a telecommunications network comprising a plurality of small cell base stations for wireless telecommunications, each of the small cell base stations being configured to: receive from a MTC unit a message indicating the MTC unit is currently in the radio coverage area of the small cell base station; and send an indication to the MTC unit to cease movement.

### Summary

The present invention is characterised over the disclosure of DE 10 2007 027651 A1 in that each of the small cell base stations is configured to: broadcast an identifier that the base station is configured to be able to communicate with any one of multiple Machine-Type-Communication (MTC) units to which the message is a reply; and the network further comprises a control node configured to receive an identity of a vehicle to be stopped, to look up a corresponding Machine-Type-Communication (MTC) unit identity, and to send a stop notification to a set of the plurality of small cell base stations causing them to broadcast said indication to said Machine-Type-Communication (MTC) unit to cease movement in response to the MTC unit having said identity attaching to one of the plurality of base stations.

The reader is referred to the appended independent claims. Some preferred features are laid out in the dependent claims.

Some embodiments provide an automated approach to detecting when vehicles are being driven inappropriately and to prevent them being driven further. Some embodiments involve using a femtocell as a controlling wireless network for which an MTC unit on the vehicle is a client.

Some embodiments involve MTC units deployed within vehicles together with femtocells deployed at key road locations in order to use automated indications to prevent vehicular incidents. Vehicles may be prevented from being driven inappropriately, without relying solely on road signs to indicate that a road should not be entered. Furthermore, deliberate attempts to travel in the wrong direction along a road may be prevented, for example during a police chase.

Some embodiments prevent incidents when vehicles are driven dangerously, for example in the wrong direction, and so aid road safety. Such incidents are often serious, resulting in injury or loss of life.

### Brief Description of the Drawings

Embodiments of the present invention will now be described by way of example and with reference to the drawings, in which:
Figure 1 is a diagram illustrating a wireless communications network according to a first embodiment of the present invention,
Figure 2 is a diagram illustrating an example femtocell base station deployment within one macrocell shown in Figure 1,
Figure 3 is a diagram illustrating in more detail a femtocell base station and vehicle shown in Figure 2,
Figure 4 is a diagram illustrating an example scenario in which the femtocell base station and vehicle shown in Figure 3 communicate,
Figure 5 is a flow diagram illustrating the operation of the femtocell base station in the scenario shown in Figure 4,
Figure 6 is a flow diagram illustrating the operation of the vehicle in the scenario shown in Figure 4,
Figure 7 is a diagram illustrating a femtocell base station, a central controller, a vehicle, and police car, according to a second embodiment of the present invention in which the central controller communicates with the femtocell base station and the femtocell base station communicates with the vehicle,
Figure 8 is a flow diagram illustrating the operation of the central controller in the scenario shown in Figure 7,
Figure 9 is a flow diagram illustrating the operation of the femtocell base station in the scenario shown in Figure 7, and
Figure 10 is a flow diagram illustrating the operation of the vehicle in the scenario shown in Figure 7.

### Detailed Description

The inventors realised that it would be beneficial to detect scenarios where a vehicle is going in the wrong direction, that is against the correct direction of the road and provide a way to help halt that inappropriate vehicle movement. The inventors realised that a wireless network element could be used to monitor and provide information to the vehicle to warn the vehicle that the vehicle is travelling in the wrong direction or to enable the vehicle to be stopped.

The inventors realised that a Machine-Type-Communication (MTC) unit installed in a vehicle can provide a link to roadside wireless network elements, such as femtocell base stations and the communications links can be configured to send information or commands to the MTC unit to trigger specific actions within the vehicle.

We now describe a network including femtocell base stations then look in greater detail at a vehicle-controlling femtocell base station and a vehicle including a Machine-Type-Communication (MTC) unit, and then how they interact.

### Network

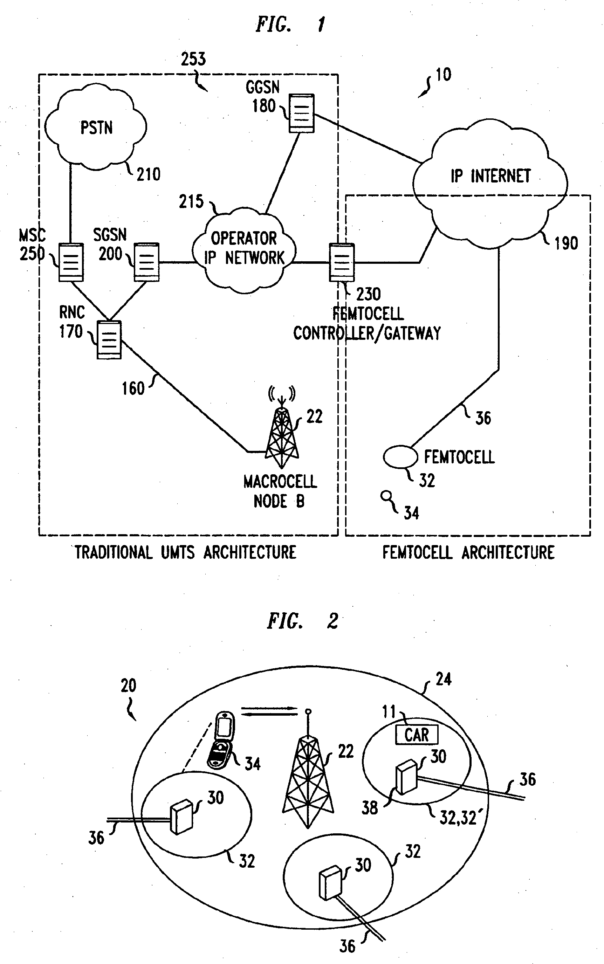

As shown in Figures 1 and 2, a network 10 for wireless communications, through which a user terminal 34 may roam, includes two types of base station, namely macrocell base stations and femtocell base stations (the latter being sometimes called "femtos").

One macrocell base station 22 is shown in Figures 1 and 2 for simplicity. Each macrocell base station has a radio coverage area 24 that is often referred to as a macrocell. The geographic extent of the macrocell 24 depends on the capabilities of the macrocell base station 22 and the surrounding geography.

Each femtocell base station 30 is of a relatively low transmit power and hence each femtocell is of a small coverage area compared to a macrocell. A typical coverage range of a femtocell is tens of metres.

Femtocell base stations have auto-configuring properties so as to support plug-and play deployment by users, for example in which femto base stations integrate themselves into an existing macrocell network so as to connect to the core network of the macrocell network. Femtocell base stations are sometimes referred to as femtos.

As shown in Figure 1, the network 10 is managed by a radio network controller, RNC, 170. The radio network controller, RNC, 170 controls the operation, for example by communicating with macrocell base stations 22 via a backhaul communications link 160. The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. For circuit-switched traffic, a mobile switching centre 250 is provided with which the radio network controller 170 may communicate. The mobile switching centre 250 communicates with a circuit-switched network such as a public switched telephone network (PSTN) 210. For packet-switched traffic, the network controller 170 communicates with serving general packet radio service support nodes (SGSNs) 220 and a gateway general packet radio support node (GGSN) 180. The GGSN then communicates with a packet-switch core 190 such as, for example, the Internet.

The MSC 250, SGSN 220, GGSN 180 and operator IP network constitute a so-called core network 253. The SGSN 220 and GGSN 180 are connected by an operator IP network 215 to a femtocell controller/gateway 230.

The femtocell controller/gateway 230 is connected via the Internet 190 to the femtocell base stations 30. These connections to the femtocell controller/gateway 230 are broadband Internet Protocol connections ("backhaul") 36.

### Femtos

In Figure 2, three femtocell base stations 30 and corresponding femtocells 32 are shown for simplicity.

As shown in Figure 2, the femtocell base stations 30 are connected via the broadband Internet Protocol connections ("backhaul") 36 to the core network (not shown in Figure 2) and hence the rest of the telecommunications "world" (not shown in Figure 2). One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. The femtocell base station also includes a radio frequency (RF) transceiver connected to an antenna for radio communications. An alternative to such a wired broadband backhaul is to have a wireless backhaul.

The "backhaul" connections 36 allow communications between the femtocell base stations 30 through the core network (not shown). The macrocell base station is also connected to the core network (not shown in Figure 2).

Some of the femtos 30 are femtos that are vehicle-controlling as explained below. In Figure 2, one such femto 38 is shown. The femto 38 is referred to as a controlling-femto. A vehicle 11 is shown within the femtocell 32' of that controlling-femto 38.

### Controlling -Femto

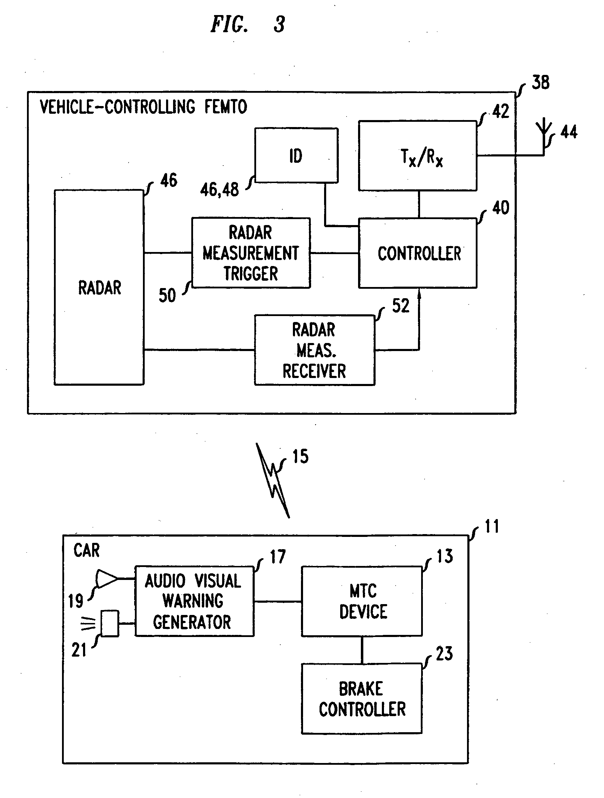

As shown in Figure 3, the controlling-femto 38 which in use is positioned near the roadside (not shown) includes a controller 40 connected via a transmitter-receiver stage 42 to an antenna 44. The controller is connected to a memory 46 that stores an identifier 48 that the femto is a controlling-femto 38. In this example the identifier is a specific Closed Subscriber Group identity.

This identifier is broadcast by the controlling-femto 38 as an indication to mobile user terminals of conventional type not to attach to the controlling-femto 38; in other words, not to handover an active session, or make an idle mode connection, with the controlling-femto 38. The identifier is also an indication to MTC units that have been previously configured to recognise the identifier, that the femto is a controlling-femto and so should be attached to. It can be considered that the MTC units are in a Closed Subscriber Group such that they may attach to any femto broadcasting that specific CSG identity, and only femtos that are controlling-femtos are permitted to broadcast that CSG identity.

The controlling-femto 38 also includes a radar detector 46 configured to detect the speed and direction of movement of the vehicle 11. The controller 40 is connected to the radar detector 46 by a radar detector trigger unit 50 and a radar measurement receiver 52.

### Vehicle

As also shown in Figure 3, the vehicle 11 includes an MTC unit 13 which can be connected by a radio communication path 15 to the controlling-femto 38.

The MTC unit 13 is a wireless radio transmitter-receiver ("transceiver") that supports infrequent transmissions of relatively small amounts of data. MTC units are typically intended to be used in locations or positions that are fixed relatively speaking, for example mounted in a vehicle, and are intended to monitor the environment and send data in response to specific location-dependent triggers. The MTC unit 13 may be considered as a type of sensor that makes use of an existing wireless network to communicate with elements within that network.

As shown in Figure 3, in the vehicle 11, the MTC unit 13 is connected to an audiovisual warning generator 17 connected to a driver interface (not shown) comprising a display screen 19 and audio speaker 21. The MTC unit 13 is also connected to a brake controller 23 configured to control automatically applying the brakes (not shown) of the vehicle 11 upon command from the MTC unit 13.

### Operation

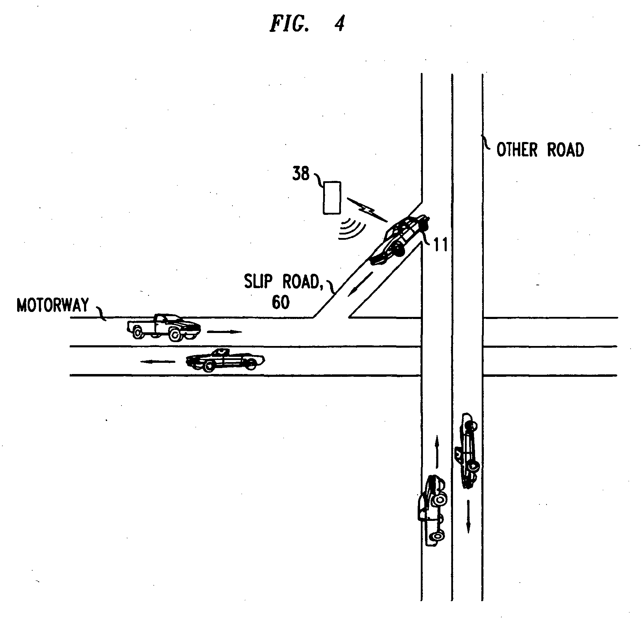

As shown in Figure 4, the controlling-femto 38 is deployed at the road side in this case at the end of a motorway exit slip-road 60 (also known in some countries as a ramp) so that MTC units in vehicles 11 passing that point will automatically attach to the controlling-femto 38.

The controlling-femto 38 operates with low transmit power and hence limited range so that the femto 38 is only detectable to user terminals and MTC units that pass close by.

Basically speaking, once the MTC unit 13 attaches, the femto 38 makes repeated measurements over time using its co-located radar 46 to determine in which direction and at what speed the vehicle in which the MTC unit is deployed is travelling. Knowing the expected correct direction of traffic flow, on the one hand if it is determined that the vehicle is travelling in the correct direction then the femto 38 simply releases the radio connection with the MTC unit. On the other hand, if detemined that the vehicle is travelling in the wrong direction, a message is sent to the MTC unit 13 triggering the audiovisual warning generator 17 to provide a visual and/or audible warning to the driver of the vehicle 11 that he or she is travelling in the wrong direction.

Subsequently if the MTC unit 13 in the vehicle 11 determines that the vehicle has not stopped a predetermined time after the warning has been issued, it commands the brake controller to automatically apply the brakes to prevent the vehicle being driven further along the road, thereby avoiding a dangerous situation.

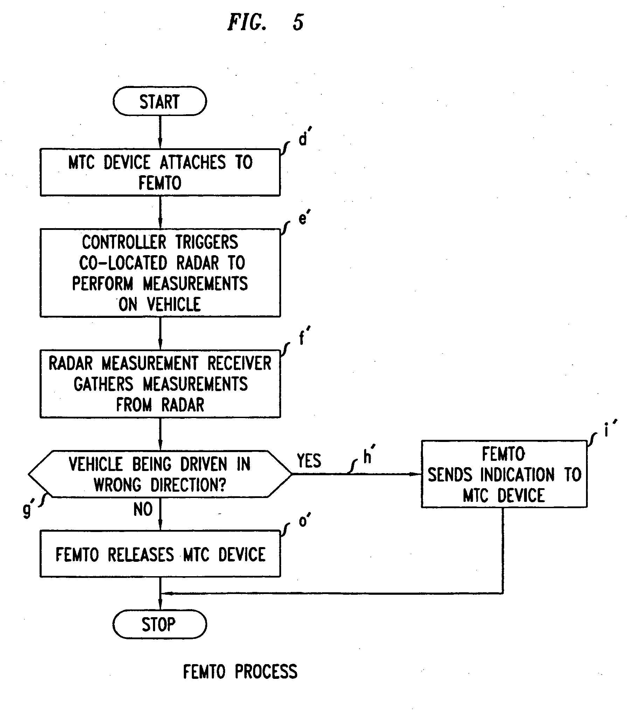

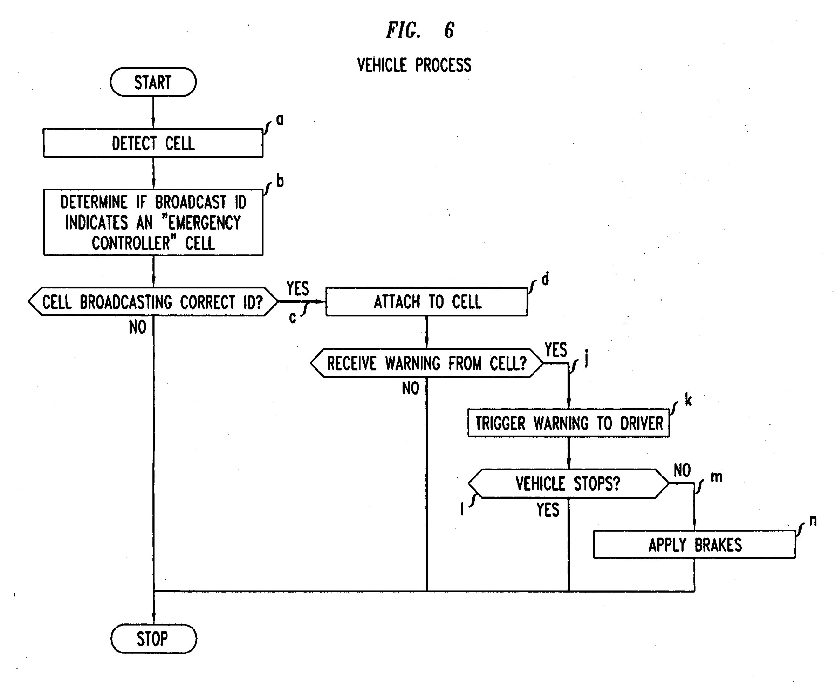

The above described operation is now described again in more detail with reference to Figures 5 and 6.

As shown in Figures 5 and 6, upon the vehicle approaching the slip road, the MTC unit 13 in the vehicle 11 detects (step a) the femtocell 32', detects (step b) the identifier broadcast by the femto 38 and recognises (step c) the received identifier as that of a controlling-femto, and so attaches (steps d, d') to that controlling-femto.

Once attached the attachment triggers (step e') the controlling-femto to use its radar to measure (step f) the speed and direction of the vehicle's travel, and so determine (step g') whether the car is going in the wrong directions down the slip road towards the motorway.

If yes (step h'), then the controlling-femto 38 sends a warning indication (step i') to the MTC unit 13 in the vehicle 11.

In the vehicle 11, upon the warning indication being received (step j), the audiovisual warning generator 17 is triggered (step k) to send the automated audio and visual warnings to the driver. A check is then made (step *l*) by the MTC unit as to whether the vehicle has stopped within a predetermined reasonable period of time. If No (step m) the brake controller 23 then acts to automatically apply the brakes (step n) so as to bring the vehicle to a halt.

If the determination (step g') of whether the car is going in the wrong directions down the slip road towards the motorway , is No, in other words the vehicle is travelling in the correct direction, then the radio connection between the controlling-femto 38 and MTC unit 13 is released by the controlling-femto 38 (step o').

### Another Example

In a further example the controlling-femto is controlled by a central control centre to send specific commands to a vehicle, such as a command instructing the vehicle to stop.

For example in the event of a police pursuit of a vehicle , the police issue a command via the central control centre for all controlling-femtos within the vicinity of the pursuit to broadcast a Closed Subscriber Group identity or other code recognisable by a MTC unit as indicating that the MTC unit within the vehicle should attach by radio to the controlling-femto.

Once the MTC unit attaches to the controlling-femto, a command is sent to the vehicle which causes the vehicle to come to a halt. The radar of the controlling-femto is used to determine the current speed and direction of the vehicle and hence the optimal rate at which to apply the brakes so that the vehicle is halted safely. This information is conveyed in the command causing the vehicle to halt, thereby ending the pursuit.

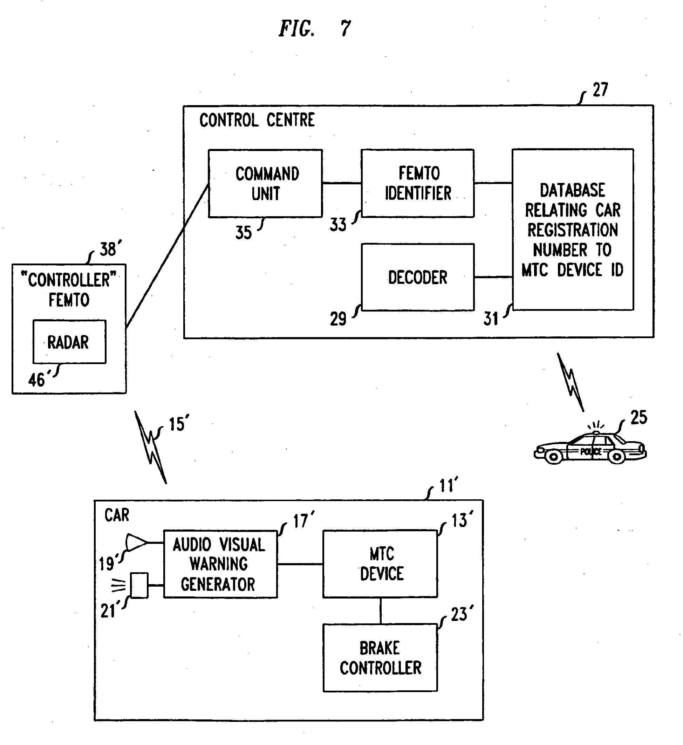

In this example, as shown in Figure 7, the controlling-femto 38' including the radar 46' is connectable by radio to the vehicle 11'.

As shown in Figure 7, the vehicle 11' includes an MTC unit 13' which can be connected by a radio communication path 15' to the controlling-femto 38'. The MTC unit 13' is connected to an audiovisual warning generator 17' connected to a driver interface (not shown) comprising a display screen 19' and audio speaker 21'. The MTC unit 13' is also connected to a brake controller 23' configured to control automatically applying the brakes (not shown) of the vehicle 11' upon command from the MTC unit 13'.

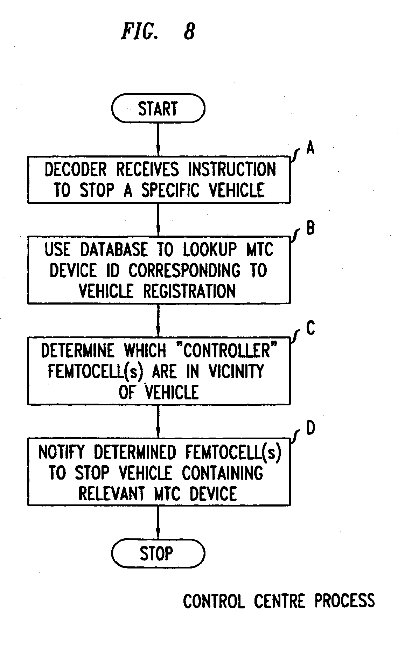

As shown in Figure 7, a police vehicle 25 in pursuit of the vehicle 11' is connected by radio to a central control centre 27. The control centre 27 includes a decoder 29 of signals from the police vehicle 25 that identify the vehicle registration plate number of the vehicle being pursued, a database 31 relating vehicle registration plate number to an identifier of the corresponding MTC unit of the vehicle, an identifier 33 of which controlling-femto is connected to the identified MTC unit, and a command unit 35 configured to send a command to the controlling-femtos identified within the vicinity of the pursuit causing one of those controlling-femtos to cause the vehicle to be stopped. This is explained in more detail below with reference to Figures 8, 9 and 10.

As shown in Figure 8, the decoder 29 of the control centre 27 receives (step A) an instruction from the police vehicle 25 to stop the vehicle 11' as they are in pursuit of that vehicle 11'. The instruction includes the registration plate number of the vehicle and geographic area of the police vehicle.

The control centre uses its database 31 to determine (step B) the identity of the MTC unit 13' of the vehicle 11'. The control centre also identifies (Step C) which controlling-femtos are in the area of the police vehicle 25 and hence the vehicle 13' being pursued. The control centre then sends (step D) a message to all of the controlling-femtos in the area. The message includes the identity of the MTC unit 13' and an instruction to those controlling-femtos to broadcast the identifier that the femto is a controlling-femto configured to communicate with a Machine-Type-Communication (MTC) unit.

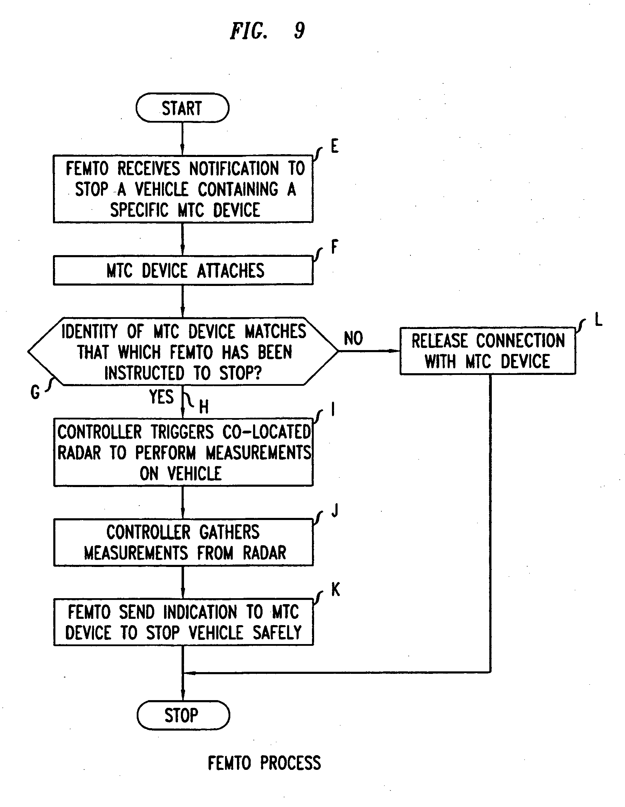

As shown in Figure 9, one of the controlling-femtos receives (step E) the message, has a MTC unit attach (step F), and upon checking (step G) whether the identity of the MTC unit as revealed by the attachment matches that of the vehicle identified in the message, determines (step H) that "Yes" there is a match. This causes that controlling-femto to trigger its radar to perform (step I) measurements on the vehicle as to its speed and direction, and gather (step J) the results of those measurements. The controlling femto then sends (step K) a stop command to the MTC unit 13' of the vehicle 11'. Conversely at step G, if there is not a match the radio attachment is released (step L).

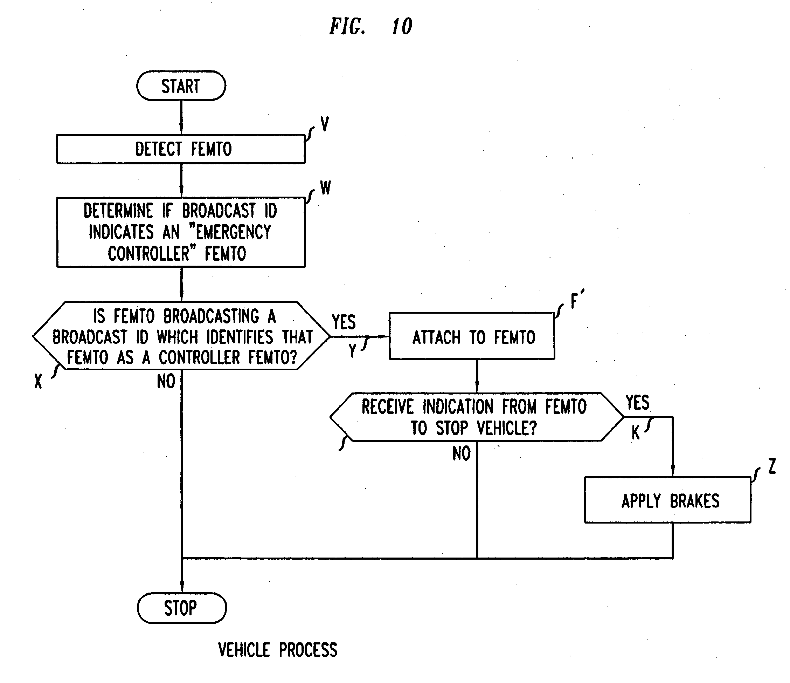

As shown in Figure 10, from the perspective of the MTC unit 13', the MTC unit 13' detects a femto (step v), detects (step w) the identifier broadcast by the femto and determines (step x) from the received identifier whether the femto is a controlling-femto.If "yes" (step y), then the MTC unit attaches (step F') to that controlling-femto. Upon receiving (step K') a stop command from the controlling-femto, the MTC unit causes the brakes of the vehicle to be slowly, smoothly and safely applied (step z) thus bringing the vehicle to a halt and so terminating the pursuit.

### Some Example Variants

In a basically similar approach to that described with reference to Figures 7 to 10, upon a sought-for MTC unit attaching to a controlling-femto, the controlling-femto sends a message to the control centre indicating that that specific MTC unit has attached. In response, the control centre triggers a command specific to that femto to stop the vehicle.

Although the specific examples detailed above involve the use of radar, other types of detectors of direction, or direction and speed, could be used instead, for example Doppler detectors.

### General

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A telecommunications network comprising a plurality of small cell base stations (38') for wireless telecommunications, each of the small cell base stations being configured to:
receive from a Machine-Type-Communication (MTC) unit (13') a message indicating the MTC unit is currently in the radio coverage area of the small cell base station; and
send an indication to the MTC unit to cease movement,
**characterised in that**
each of the small cell base stations is configured to:
broadcast an identifier that the base station is configured to be able to communicate with any one of multiple Machine-Type-Communication (MTC) units to which the message is a reply; and
the network further comprises a control node (27) configured to receive (Fig 8:A) an identity of a vehicle to be stopped, to look up (Fig 8:B) a corresponding MTC unit identity, and to send (Fig 8:D) a stop notification to a set of the plurality of small cell base stations causing them to broadcast said indication to said Machine-Type-Communication (MTC) unit to cease movement in response to the MTC unit (13') having said identity attaching to one of the plurality of base stations.

2. A telecommunications network according to claim 1, in which the set of small cell base stations is selected (Fig 8C) dependent on knowledge of an area in which the MTC unit having said identity may be, and knowledge of where the small cell base stations are situated.

3. A telecommunications network according to claim 1 or claim 2, in which each small cell base station (13,13') includes a radar detector (38,38') configured to measure direction of movement of the MTC unit; the small cell base station being configured to determine whether the MTC unit is travelling in a forbidden direction, and upon determining that the MTC unit is travelling in a forbidden direction, to send the indication to cease movement.

4. A telecommunications network according to any preceding claim, in which each small cell base station includes a radar detector (38') configured to determine speed of the MTC unit, and upon determining that the MTC unit is moving, sending the indication to the MTC unit to cease movement.

5. A method of controlling movement of a Machine-Type-Communication (MTC) unit from a small cell base station which is one of a plurality of small cell base stations in a telecommunications network, the method comprising:
receiving a message from a MTC unit (13') indicating the MTC unit is currently in the radio coverage area of the small cell base station, and
sending an indication towards the MTC unit (13') to cease movement;
**characterised by** the method comprising
broadcasting an identifier that the base station (38') is configured to be able to communicate with any one of multiple MTC units to which the message is a reply; and
an identity of a vehicle to be stopped is received by a control node (27) and used (31) to look up a corresponding Machine-Type Communication (MTC) unit identity, and the control node sends a stop notification (Fig 8:D) to a set of the plurality of small cell base stations causing them to broadcast (Fig 9:K) said indication to said Machine-Type-Communication (MTC) unit to cease movement in response to the MTC unit having said identity attaching (Fig 9:F,G,H) to one of the plurality of base stations.

## Patentansprüche

1. Telekommunikationsnetzwerk mit einer Vielzahl von kleinzelligen Basisstationen (38') für die drahtlose Telekommunikation, wobei eine jede der kleinzelligen Basisstationen konfiguriert ist für
den Empfang, von einer maschinenartigen Kommunikations- bzw. MTC-Einheit (13'), einer Nachricht, welche angibt, dass sich die MTC-Einheit gegenwärtig im Funkabdeckungsbereich der kleinzelligen Basisstation befindet; und
das Senden einer Angabe an die MTC-Einheit, um die Bewegung zu unterbrechen,
**dadurch gekennzeichnet, dass**
eine jede der kleinzelligen Basisstationen dafür konfiguriert ist,
einen Identifikator dafür, dass die Basisstation für die Fähigkeit, mit einer beliebigen einer Vielzahl von maschinenartigen Kommunikations- bzw. MTC-Einheiten, an welche die Nachricht eine Antwort ist, zu kommunizieren, konfiguriert ist, zu broadcasten; und
das Netzwerk weiterhin einen Steuerknoten (27) umfasst, welcher dafür konfiguriert ist, eine Identität eines anzuhaltenden Fahrzeugs zu empfangen (Fig 8:A), die Identität einer entsprechenden maschinenartigen Kommunikations- bzw. MTC-Einheit nachzusehen (Fig 8:B) und eine Stopp-Meldung an einen Satz der Vielzahl von kleinzelligen Basisstationen zu senden (Fig 8:D), um zu bewirken, dass diese die besagte Angabe an die besagte maschinenartige Kommunikations- bzw. MTC-Einheit sendet, um die Bewegung zu unterbrechen, in Reaktion darauf, dass die besagte Identität der MTC-Einheit (13') mit einer der Vielzahl von Basisstationen verbunden ist.

2. Telekommunikationsnetzwerk nach Anspruch 1, wobei der Satz von kleinzelligen Basisstationen in Abhängigkeit von der Kenntnis eines Bereichs, in welchem sich die MTC-Einheit mit der besagten Identität aufhalten kann, und von der Kenntnis, wo sich die kleinzelligen Basisstationen befinden, ausgewählt (Fig 8:C) wird.

3. Telekommunikationsnetzwerk nach Anspruch 1 oder 2, wobei jede kleinzellige Basisstation (13, 13') einen Radardetektor (38, 38') umfasst, welcher für das Messen der Bewegungsrichtung der MTC-Einheit konfiguriert ist; wobei die kleinzellige Basisstation dafür konfiguriert ist, zu ermitteln, ob sich die MTC-Einheit in einer verbotenen Richtung bewegt, und bei Ermitteln dass sich die MTC-Einheit in einer verbotenen Richtung bewegt, die Angabe zu senden, um die Bewegung zu unterbrechen.

4. Telekommunikationsnetzwerk nach einem beliebigen der vorstehenden Ansprüche, wobei die kleinzellige Basisstation einen Radardetektor (38') umfasst, welcher dafür konfiguriert ist, die Geschwindigkeit der MRC-Einheit zu ermitteln und nach Ermitteln, dass sich die MTC-Einheit bewegt, die Angabe an die MTC-Einheit zu senden, um die Bewegung zu unterbrechen.

5. Verfahren zur Steuerung der Bewegung einer maschinenartigen Kommunikations- bzw. MTC-Einheit von einer kleinzelligen Basisstation, welche eine einer Vielzahl von kleinzelligen Basisstationen in einem Telekommunikationsnetzwerk ist, wobei das Verfahren umfasst:
Empfangen einer Nachricht von einer MTC-Einheit (13'), welche angibt, dass sich die MTC-Einheit gegenwärtig in dem Funkabdeckungsbereich der kleinzelligen Basisstation befindet, und
Senden einer Angabe an die MTC-Einheit (13'), um die Bewegung zu unterbrechen;
**dadurch gekennzeichnet, dass** das Verfahren umfasst:
Broadcasten eines Identifikators darüber, dass die Basisstation (38') für die Fähigkeit, mit einer beliebigen der Vielzahl von MTC-Einheiten, an welche die Nachricht eine Antwort ist, zu kommunizieren, konfiguriert ist; und
dass eine Identität eines anzuhaltenden Fahrzeugs an einem Steuerknoten (27) empfangen und für das Nachsehen der Identität einer entsprechenden maschinenartigen Kommunikations- bzw. MTC-Einheit verwendet (31) wird, und dass der Steuerknoten eine Stopp-Meldung (Fig 8:D) an einen Satz der Vielzahl von kleinzelligen Basisstationen sendet, um zu bewirken, dass diese die besagte Angabe an die besagte maschinenartige Kommunikations- bzw. MTC-Einheit broadcastet (Fig 9:K), um die Bewegung zu unterbrechen, in Reaktion darauf, dass die besagte Identität der MTC-Einheit mit einer der Vielzahl von Basisstationen verbunden (Fig 9:F,G,H) ist.

## Revendications

1. Réseau de télécommunication comprenant une pluralité de stations de base de petites cellules (38') pour des télécommunications sans fil, chacune des stations de base de petites cellules étant configurée pour :
recevoir à partir d'une unité de communication de type machine (13') un message indiquant que l'unité MTC est actuellement dans la zone de couverture radio de la station de base de petites cellules ; et
envoyer une indication à l'unité MTC pour interrompre le mouvement,
**caractérisé en ce que**
chacune des stations de base de petites cellules est configurée pour :
diffuser un identifiant que la station de base est configurée pour pouvoir communiquer avec l'une quelconque parmi de multiples unités de communication de type machine (MTC) pour lesquelles le message est une réponse ; et
le réseau comprend en outre un noeud de commande (27) configuré pour recevoir (Fig 8:A) une identité d'un véhicule à arrêter, pour rechercher (Fig 8) une identité d'unité MTC correspondante, et pour envoyer (Fig 8:D) une notification d'arrêt à un ensemble de la pluralité de stations de base de petites cellules les entraînant à diffuser ladite indication à ladite unité de communication de type machine (MTC) pour interrompre le mouvement en réponse à l'unité MTC (13') ayant ledit attachement d'identité à une parmi la pluralité de stations de base.

2. Réseau de télécommunication selon la revendication 1, dans lequel l'ensemble de stations de base de petites cellules est sélectionné (Fig 8:C) en fonction de la connaissance d'une zone dans laquelle l'unité MTC ayant ladite identité peut être située, et de la connaissance de l'emplacement dans lequel les stations de base de petites cellules sont situées.

3. Réseau de télécommunication selon la revendication 1 ou la revendication 2, dans lequel chaque station de base de petites cellules (13,13') comprend un détecteur de radar (39,38') configuré pour mesurer le sens de mouvement de l'unité MTC ; la station de base de petites cellules étant configurée pour déterminer si l'unité MTC se déplace dans un sens interdit, et lorsqu'il est déterminé que l'unité MTC se déplace dans un sens interdit, pour envoyer l'indication pour interrompre le mouvement.

4. Réseau de télécommunication selon l'une quelconque des revendications précédentes, dans lequel chaque station de base de petites cellules comprend un détecteur de radar (38') configuré pour déterminer la vitesse de l'unité MTC et, lorsqu'il est déterminé que l'unité MTC se déplace, pour envoyer l'indication à l'unité MTC pour interrompre le mouvement.

5. Procédé pour commander le mouvement d'une unité de communication de type machine (MTC) à partir d'une station de base de petites cellules qui est une station de base parmi une pluralité de stations de base de petites cellules dans un réseau de télécommunication, le procédé comprenant les étapes suivantes :
recevoir à partir d'une unité MTC (13') un message indiquant que l'unité MTC est actuellement dans la zone de couverture radio de la station de base de petites cellules ; et
envoyer une indication à l'unité MTC (13') pour interrompre le mouvement ;
**caractérisé par** le procédé comprenant l'étape suivante
diffuser un identifiant que la station de base (38') est configurée pour pouvoir communiquer avec l'une quelconque parmi de multiples unités MTC pour lesquelles le message est une réponse ; et
une identité d'un véhicule à arrêter est reçue par un noeud de commande (27) et utilisée (31) pour rechercher une identité d'unité de communication de type machine (MTC) correspondante, et le noeud de commande envoie une notification d'arrêt (Fig 8:D) à un ensemble de la pluralité de stations de base de petites cellules les entraînant à diffuser (Fig 9:K) ladite indication à ladite unité de communication de type machine (MTC) pour interrompre le mouvement en réponse à l'unité MTC ayant ledit attachement d'identité (Fig 9:F,G,H) à une parmi la pluralité de stations de base.
